**Europäisches Patentamt**

**European Patent Office**

**Office européen des brevets**

(11) Veröffentlichungsnummer: **0 501 443 A1**

# EUROPÄISCHE PATENTANMELDUNG

(21) Anmeldenummer: **92103258.7**

(22) Anmeldetag: **26.02.92**

(51) Int. Cl.5: **F24D 3/16, E04B 9/04**

(30) Priorität: **26.02.91 DE 9102266 U**

(43) Veröffentlichungstag der Anmeldung:
**02.09.92 Patentblatt 92/36**

(84) Benannte Vertragsstaaten:
**AT BE CH DE DK ES FR GB GR IT LI LU NL PT**

(71) Anmelder: **Zehnder-Beutler GmbH**
**Almweg 34**
**W-7630 Lahr 12(DE)**

(72) Erfinder: **Sexauer, Gerd Dipl.-Ing.**
**Martin-Luther-Strasse 8**
**W-7832 Kenzingen(DE)**

(74) Vertreter: **Patentanwälte Dipl.-Ing. Alex**
**Stenger Dipl.-Ing. Wolfram Watzke Dipl.-Ing.**
**Heinz J. Ring**
**Kaiser-Friedrich-Ring 70**
**W-4000 Düsseldorf 11(DE)**

(54) **Vorrichtung zur Aufhängung von Deckenstrahlplatten.**

(57) Die Erfindung betrifft eine Vorrichtung zur Aufhängung von Deckenstrahlplatten, die aus einer kassettenförmigen Grundplatte und in Ausformungen dieser Grundplatte verlaufenden Kanälen für das wärmeabgebende Medium bestehen, mittels an einer Deckenkonstruktion zu befestigender Tragpendel. Um eine Vorrichtung zur Aufhängung von Deckenstrahlplatten der eingangs beschriebenen Art zu schaffen, die ohne die Notwendigkeit von Schweißarbeiten auf einfache Weise an die gegebenen Verhältnisse des Gebäudes angepaßt werden kann, in dem die Deckenstrahlplatten zu montieren sind, ist die Deckenstrahlplatte mit mindestens zwei symmetrisch zur Mitte angeordneten und über die gesamte Länge verlaufenden Anschlagkanten (7) ausgebildet, an die quer zur Längsrichtung der Deckenstrahlplatte ausgerichtete Tragleisten (5) mit die jeweilige Anschlagkante (7) untergreifenden Vorsprüngen (8) ansetzbar sind, die ihrerseits mit den Tragpendeln (6) verbunden sind.

Fig.1

Rank Xerox (UK) Business Services

Die Erfindung betrifft eine Vorrichtung zur Aufhängung von Deckenstrahlplatten, die aus einer kassettenförmigen Grundplatte und in Ausformungen dieser Grundplatte verlaufenden Kanälen für das wärmeabgebende Medium bestehen, mittels an einer Deckenkonstruktion zu befestigender Tragpendel.

Deckenstrahlplatten der voranstehend beschriebenen Art sind bekannt. Sie werden mittels Tragpendeln an der jeweiligen Deckenkonstruktion befestigt, wobei diese Tragpendel an Querstreben angreifen, die auf der Baustelle oder beim Hersteller entsprechend den örtlichen Gegebenheiten an die Deckenstrahlplatten angeschweißt werden.

Der Erfindung liegt die **Aufgabe** zugrunde, eine Vorrichtung zur Aufhängung von Deckenstrahlplatten der eingangs beschriebenen Art zu schaffen, die ohne die Notwendigkeit von Schweißarbeiten auf einfache Weise an die gegebenen Verhältnisse des Gebäudes angepaßt werden kann, in dem die Deckenstrahlplatten zu montieren sind.

Die **Lösung** dieser Aufgabenstellung durch die Erfindung ist dadurch gekennzeichnet, daß die Deckenstrahlplatte mit mindestens zwei symmetrisch zur Mitte angeordneten und über die gesamte Länge verlaufenden Anschlagkanten ausgebildet ist, an die quer zur Längsrichtung der Deckenstrahlplatte ausgerichtete Tragleisten mit die jeweilige Anschlagkante untergreifenden Vorsprüngen ansetzbar sind, die ihrerseits mit den Tragpendeln verbunden sind.

Durch die erfindungsgemäße Ausbildung von über die gesamte Länge der Deckenstrahlplatte verlaufenden Anschlagkanten ergibt sich die Möglichkeit, die zugehörigen Tragleisten, die mit die Anschlagkante untergreifenden Vorsprüngen ausgebildet sind, entsprechend den gegebenen örtlichen Verhältnissen an der jeweils erforderlichen Stelle an die Deckenstrahlplatte einzusetzen, ohne daß zu diesem Zweck Schweißarbeiten durchgeführt werden müssen. Die auf die Anschlagkanten der Deckenstrahlplatte abgestimmten Tragleisten werden im Herstellwerk lose den Deckenstrahlplatten beigelegt. Zur Montage der Deckenstrahlplatten an der Deckenkonstruktion des jeweiligen Gehäuse genügt es, diese Tragleisten an die Deckenstrahlplatte anzusetzen und über die ebenfalls beigefügten Tragpendel an der Deckenkonstruktion zu befestigen. Die erfindungsgemäße Aufhängevorrichtung ist auf diese Weise mit geringstmöglichem Arbeitsaufwand an die jeweiligen Gegebenheiten der Deckenkonstruktion anpaßbar; außerdem werden durch den Wegfall der bisher notwendigen Schweißarbeiten Beschädigungen des Oberflächenschutzes der Deckenstrahlplatten vermieden.

Gemäß einem weiteren Merkmal der Erfindung können die Anschlagkanten jeweils durch eine der Fläche der Grundplatte zugewandte Abbiegung an den U-förmig abgebogenen Rändern der Grundplatte gebildet sein. Bei dieser erfindungsgemäßen Ausführung greifen die Tragleisten somit an den parallel verlaufenden Rändern der kassettenförmigen Grundplatte an.

Bei einer alternativen Ausführungsform der Erfindung sind zur Bildung der Anschlagkanten mindestens zwei Kanäle der Deckenstrahlplatte mit seitlich über den Kanalquerschnitt überstehenden Rändern versehen. In diesem Fall greifen die Vorsprünge der Tragleisten unter diese über den Kanalquerschnitt überstehenden Ränder. Hierbei ist es möglich, eine der Anzahl der Kanalquerschnitte entsprechende Zahl von Verbindungsstellen zwischen den Tragleisten und der Deckenstrahlplatte zu verwirklichen.

In beiden Fällen können die Tragleisten auf einfache Weise dadurch an der Deckenstrahlplatte angebracht werden, daß sie unter einem spitzen Winkel zur Querrichtung der Deckenstrahlplatte angesetzt und anschließend in ihre endgültig Lage verschwenkt oder von der Stirnwand übergestreift werden, in der sie quer zur Längsrichtung der Deckenstrahlplatte ausgerichtet sind. Die Anschlagkanten an den Deckenstrahlplatten und die diese Anschlagkanten untergreifenden Vorsprünge an den Tragleisten sind hierbei derart ausgeführt, daß ein seitliches Verrutschen ausgeschlossen ist.

Auf der Zeichnung sind zwei Ausführungsbeispiele der erfindungsgemäßen Aufhängevorrichtung dargestellt, und zwar zeigen:

Fig. 1 eine Stirnansicht einer ersten Ausführungsform einer Deckenstrahlplatte mit einer zugehörigen Tragleiste und

Fig. 2 eine der Fig. 1 entsprechende weitere Stirnansicht einer zweiten Ausführungsform von Deckenstrahlplatte und Tragleiste.

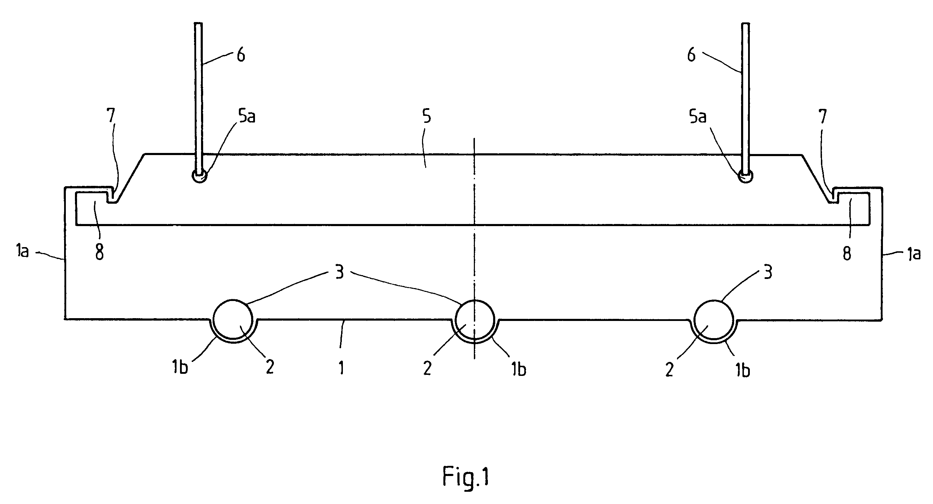

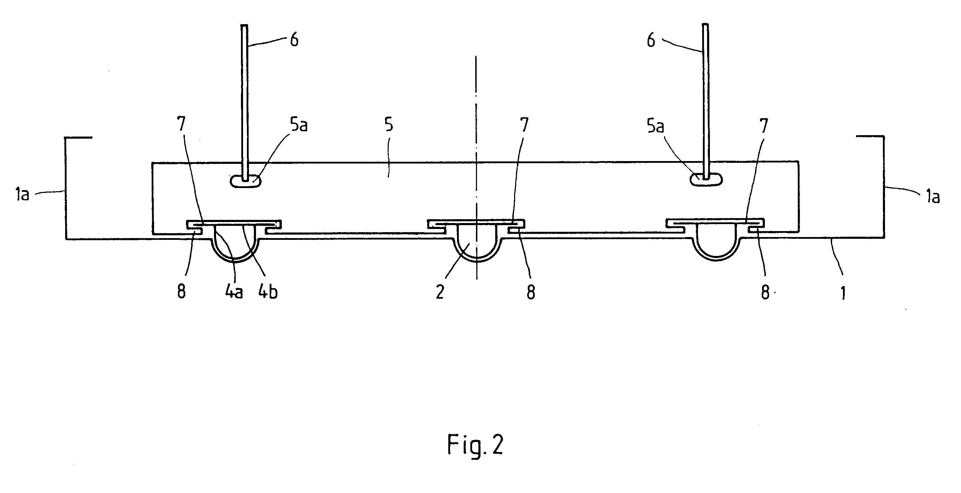

Bei beiden Ausführungsbeispielen besteht die Deckenstrahlplatte aus einer kassettenförmigen Grundplatte 1, deren parallel zueinander verlaufende Ränder 1a U-förmig abgebogen sind, um die Kassettenform zu bilden. In Ausformungen 1b der Grundplatte 1 sind Kanäle 2 für das wärmeabgebende Medium ausgebildet. Beim ersten Ausführungsbeispiel nach Fig. 1 werden diese Kanäle 2 durch in die Ausformungen 1b eingelegte Rohre 3 mit kreisförmigem Querschnitt gebildet. Bei der Ausführungsform nach Fig. 2 werden zur Bildung der Kanäle 2 Rohre verwendet, die aus einer etwa halbkreisförmigen Schale 4a und einem Deckstreifen 4b bestehen.

Um diese Deckenstrahlplatten an der jeweiligen Deckenkonstruktion aufzuhängen, werden Tragleisten 5 verwendet, die mit Löchern 5a zum Einhängen von Tragpendeln 6 versehen sind. Diese Tragpendel 6 werden in geeigneter Weise an der jeweiligen Deckenkonstruktion befestigt.

Um die Tragleisten 5 ohne die Notwendigkeit von Schweißarbeiten an den Deckenstrahlplatten anbringen zu können, sind die Deckenstrahlplatten mit über ihre gesamte Länge verlaufenden Anschlagkanten 7 versehen, die von Vorsprüngen 8 der Tragleisten 5 untergriffen werden.

Beim Ausführungsbeispiel nach Fig. 1 werden die Anschlagkanten 7 durch eine der Fläche der Grundplatte 1 zugewandte Abbiegung an den U-förmig abgebogenen Rändern 1a der Grundplatte 1 gebildet. Dementsprechend sind die Vorsprünge 8 an den Enden der zugehörigen Tragleiste 5 ausgebildet. Beim Ausführungsbeispiel nach Fig. 2 werden die Anschlagkanten 7 durch die über die Schale 4a der Rohre überstehenden Ränder der Deckstreifen 4b gebildet. Die Vorsprünge 8 an der Tragleiste 5 sind entsprechend ausgeführt.

Bei beiden Ausführungen lassen sich die Tragleisten 5 an jeder beliebigen Stelle über die gesamte Länge der Deckenstrahlplatte ohne Schweißarbeit an diese ansetzen, so daß die Deckenstrahlplatte auf einfache Weise anhand der lose mitgelieferten Tragleisten 5 aufgehängt werden kann.

**Bezugzeichenliste:**

| 1 | Grundplatte |
|---|---|
| 1a | Rand |
| 1b | Ausformung |
| 2 | Kanal |
| 3 | Rohr |
| 4a | Schale |
| 4b | Deckstreifen |
| 5 | Tragleiste |
| 5a | Loch |
| 6 | Tragpendel |
| 7 | Anschlagkante |
| 8 | Vorsprung |

**Patentansprüche**

1.  Vorrichtung zur Aufhängung von Deckenstrahlplatten, die aus einer kassettenförmigen Grundplatte und in Ausformungen dieser Grundplatte verlaufenden Kanälen für das wärmeabgebende Medium bestehen, mittels an einer Deckenkonstruktion zu befestigender Tragpendel,
    **dadurch gekennzeichnet,**
    daß die Deckenstrahlplatte mit mindestens zwei symmetrisch zur Mitte angeordneten und über die gesamte Länge verlaufenden Anschlagkanten (7) ausgebildet ist, an die quer zur Längsrichtung der Deckenstrahlplatte ausgerichtete Tragleisten (5) mit die jeweilige Anschlagkante (7) untergreifenden Vorsprüngen (8) ansetzbar sind, die ihrerseits mit den Tragpendeln (6) verbunden sind.

2.  Vorrichtung nach Anspruch (1), dadurch gekennzeichnet, daß die Anschlagkanten (7) jeweils durch eine der Fläche der Grundplatte (1) zugewandte Abbiegung an den U-förmig abgebogenen Rändern (1a) der Grundplatte (1) gebildet sind.

3.  Vorrichtung nach Anspruch 1, dadurch gekennzeichnet, daß zur Bildung der Anschlagkanten (7) mindestens zwei Kanäle (2) mit seitlich über den Kanalquerschnitt überstehenden Rändern versehen sind.

Fig.1

Fig.2

Europäisches
Patentamt

**EUROPÄISCHER RECHERCHENBERICHT**

Nummer der Anmeldung

EP    92 10 3258

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-U-9 000 698 (KLOSTERMANN) | 1 | F24D3/16 |
| A | * das ganze Dokument * | 2 | E04B9/04 |
| | --- | | |
| A | US-A-4 424 656 (LAVANTURE) | 1,3 | |
| | * das ganze Dokument * | | |
| | --- | | |
| A | BE-A-890 513 (AIR ET CHALEUR S.A.) | 1,2 | |
| | * Abbildung 2 * | | |
| | ----- | | |

| | RECHERCHIERTE SACHGEBIETE (Int. Cl.5 ) |
|---|---|
| | F24D |
| | E04B |

Der vorliegende Recherchenbericht wurde für alle Patentansprüche erstellt

| Recherchenort | Abschlußdatum der Recherche | Prüfer |
|---|---|---|
| DEN HAAG | 02 JUNI 1992 | VAN GESTEL H.M. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
...................................................................................
& : Mitglied der gleichen Patentfamilie, übereinstimmendes
  Dokument

EPO FORM 1503 03.82 (P0403)